# EUROPÄISCHE PATENTSCHRIFT

(11) **EP 0 518 173 B1**
(45) Veröffentlichungstag und Bekanntmachung des Hinweises auf die Patenterteilung: **18.01.1995**
(21) Anmeldenummer: 92109238.3
(22) Anmeldetag: 02.06.1992
(51) Int. Cl.: B60B 15/28

(54) **Fahrzeugrad mit Radgewichten**
Vehicle with wheel weights
Roue de véhicule avec poids

(30) Priorität: 14.06.1991 US 715176
(43) Veröffentlichungstag der Anmeldung: 16.12.1992
(73) Patentinhaber: DEERE & COMPANY, Moline, Illinois 61265 (US)
(72) Erfinder: Hardesty, Terry Dean, Columbus, Wisconsin 53925 (US); Hutchison, Wayne Robert, Mayville, Wisconsin 53050 (US); Teal, Richard Donald, Horicon, Wisconsin 53032 (US); Cleereman, Robert John, Midland, Michigan 48640 (US)
(74) Vertreter: Feldmann, Bernhard

(56) Entgegenhaltungen:
- CH-A- 116 262
- US-A- 1 589 915
- US-A- 2 090 870
- US-A- 2 606 075
- US-A- 2 988 401

## Beschreibung

Die Erfindung bezieht sich auf ein Fahrzeugrad mit einer Radnabe, einem Felgenabschnitt und einer Felgenabschnitt und Radnabe verbindenden ersten Radscheibe, wobei zwischen Felgenabschnitt und Radnabe Rippen vorgesehen sind und benachbarte Rippen zwischen sich Aufnahmeräume für Radgewichte bilden.

Fahrzeuge müssen vielfach mit Ballastgewichten versehen sein, um ein Durchdrehen der Treibräder oder beispielsweise bei Heckanbaugeräten ein Aufbäumen zu verhindern. Ballastgewichte können an der Vorderseite eines Fahrzeuges oder auch in seinem rückwärtigen Bereich vorgesehen werden. Bei dem Fahrzeugrad, von dem die Erfindung ausgeht (US-A-1 589 915), sind die Ballast- oder Radgewichte mit einer Seite einer Radscheibe verschraubt. Die Radgewichte füllen den gesamten Radkranz aus, und ihr Gewicht muß von der einzigen Radscheibe aufgenommen werden. Jedes Radgewicht muß einzeln in seinen Aufnahmeraum eingesetzt werden und ist dort zu verschrauben. Eine gleichmäßige Belastung der Radachse findet nicht statt, und das Rad selbst muß sehr stabil und damit teuer ausgebildet werden.

Die mit der Erfindung zu lösende Aufgabe wird darin gesehen, ein Fahrzeugrad derart auszubilden, daß es im Prinzip in Leichtbauweise hergestellt werden kann und vorteilhafter für die Aufnahme von Radgewichten gestaltet ist. Diese Aufgabe ist dadurch gelöst worden, daß auf der Radnabe mit Querabstand zu der ersten Radscheibe eine zweite Radscheibe vorgesehen ist und die erste und zweite Radscheibe mindestens je eine Öffnung aufweisen, die derart angeordnet und ausgebildet sind, daß Radgewichte in benachbarte Aufnahmeräume abwechselnd durch die erste und durch die zweite Radscheibe einsetzbar sind. Auf diese Weise wird das Gewicht der Radgewichte von den einzelnen Aufnahmeräumen aufgenommen, die Radachse wird gleichmäßig belastet und die Gewichte sind leicht einsetzbar.

Eine die Radscheibe nicht belastende Befestigung der Radgewichte ist nach einem weiteren Vorschlag der Erfindung dadurch erreichbar, daß benachbarte Radgewichte miteinander in den Aufnahmeräumen verbindbar sind.

Im einzelnen können sich die Rippen ferner radial erstrecken und zwischen sich keilförmige durch eine Felge, die Radnabe und die erste oder die zweite Radscheibe begrenzte Aufnahmeräume bilden, die dann jeweils zu einer Seite zum Einsetzen der Radgewichte offen sind.

Nach der Erfindung können zwei halbkreisförmig ausgebildete und von je einer Seite einsetzbare Gewichte vorgesehen werden. Es wird aber bevorzugt, daß die erste und die zweite Radscheibe mindestens zwei zu je einem Aufnahmeraum führende Öffnungen aufweist, so daß von jeder Seite aus mindestens zwei Gewichte einsetzbar sind. Eine Aufteilung in sechs einzelne Radgewichte hat sich als besonders vorteilhaft gezeigt.

Nach einem weiteren Vorschlag der Erfindung brauchen die Radgewichte nicht einzeln eingesetzt zu werden, sondern können von jeder Seite als eine Einheit aufgenommen werden, wenn ein erster Satz miteinander verbundener Radgewichte durch die Öffnungen in der ersten Radscheibe und ein zweiter Satz miteinander verbundener Radgewichte durch die Öffnungen in der zweiten Radscheibe in ihre zugehörigen Aufnahmeräume einsetzbar ist. Um jeden Satz in einfacher Weise miteinander verbinden zu können, sind ferner die Radgewichte eines jeden Satzes über eine Platte miteinander verbunden, die mit wenigstens einem Radgewicht des anderen Satzes verschraubbar ist, wobei die Radscheibe, durch die der Satz einsetzbar ist, zwischen ihren Öffnungen mindestens ein Durchgangsloch aufweist. Ein Radgewicht weist hierzu an seiner seiner zugehörigen Platte abgelegenen Seite eine Gewindebohrung auf, die zu der Durchgangsöffnung in der Radscheibe im eingesetzten Zustand ausgerichtet ist und somit mit der anderen Platte leicht verschraubt werden kann.

Um das äußere Erscheinungsbild zu verbessern, können die Öffnungen der außen liegenden Radscheibe durch eine Radkappe verschließbar sein.

Zweckmäßig ist die Platte ringförmig ausgebildet und weist eine innere Öffnung auf, die der Nabenöffnung entspricht.

Die Ausbildung des Fahrzeugrades und die Befestigung der beiden Sätze Radgewichte miteinander ist derart, daß die Radscheiben das Gewicht der Radgewichte nicht aufnehmen, so daß das Fahrzeugrad aus Kunststoff hergestellt werden kann.

In der Zeichnung ist ein nachfolgend näher erläutertes Ausführungsbeispiel der Erfindung dargestellt. Es zeigt:
- Fig. 1: ein in der Garten- und Landschaftspflege einsetzbares und mit Radgewichten bestücktes Fahrzeug,
- Fig. 2: ein Fahrzeugrad mit zwei Sätzen Radgewichten in auseinandergezogener Darstellung und
- Fig. 3: einen Schnitt nach der Linie 3 : 3 in Fig. 2.

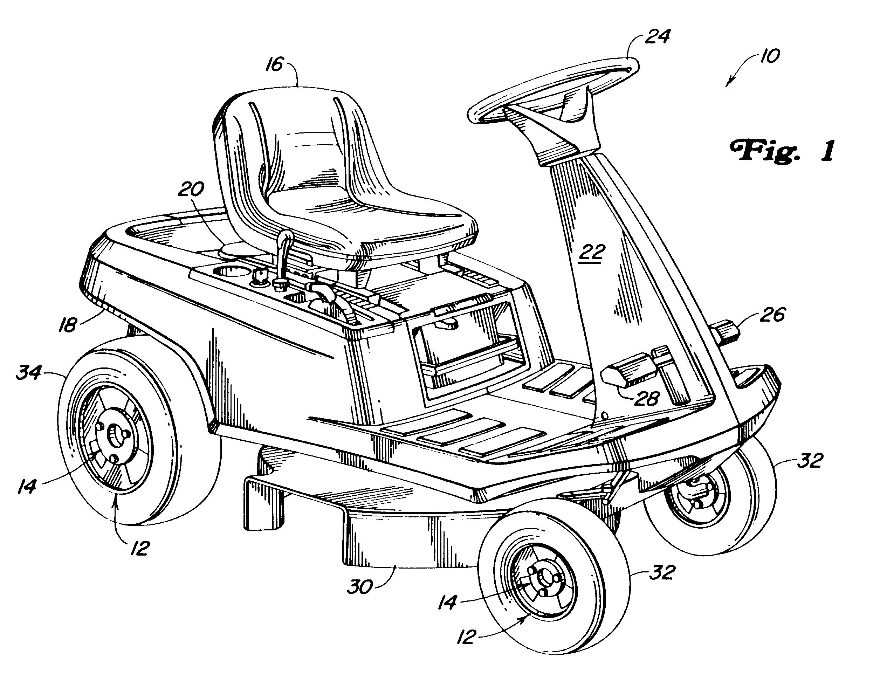

In Fig. 1 der Zeichnung ist ein Fahrzeug für die Garten- und Grundstückspflege mit 10 bezeichnet. Es ist im wesentlichen aus Kunststoff hergestellt. Seine Räder 12 sind ebenfalls aus Kunststoff gefertigt und so ausgebildet, daß sie einen ersten und einen zweiten Satz 14 Radgewichte aufnehmen können.

Das Fahrzeug 10 ist mit einem Fahrersitz 16 auf einem Fahrwerk 18 versehen, das einen Verbrennungsmotor 20, eine Steuersäule 22 mit einem Lenkrad 24, ein Kupplungs- und ein Bremspedal 26 und 28 und ein Mähwerk 30 aufweist, das zwischen den Achsen des Fahrzeuges 10 aufgehängt ist. Die vorderen lenkbaren Laufräder sind mit 32 und die rückwärtigen antreibbaren Laufräder sind mit 34 bezeichnet. Sie bestehen aus den Kunststoffrädern 12 und darauf aufgezogenen Reifen. Eine Kunststoffbauweise der Räder 12 wird bevorzugt, doch sind im Rahmen der Erfindung auch andere Bauweisen denkbar.

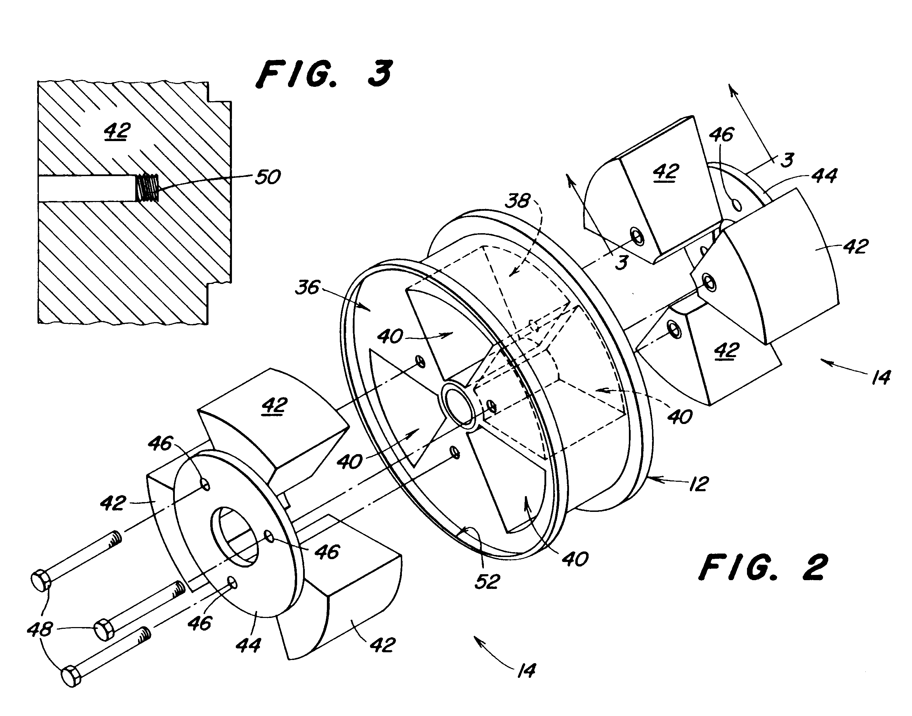

In der Fig. 2 ist ein Kunststoffrad 12 erkennbar, in das je ein Satz 14 Radgewichte von beiden Seiten eingesetzt werden kann. Das Rad 12 besteht aus einer inneren Radnabe, die an ihren Enden je eine Radscheibe 36 und 38 aufnimmt. Die Radscheiben 36 und 38 haben einen gegenseitigen Querabstand, der im wesentlichen der Radbreite entspricht. Zwischen den beiden Radscheiben sind auf der Radnabe noch sich radial erstreckende Rippen vorgesehen, wodurch der Raum zwischen den Radscheiben in sechs mit Bezug auf die Umfangsrichtung nebeneinanderliegende Aufnahmeräume 40 für die beiden Sätze 14 von Radgewichten aufgeteilt wird. Die einzelnen Aufnahmeräume 40 werden an ihrer Unterseite durch die Radnabe begrenzt und haben infolge der radial verlaufenden Rippen eine Keilform mit einer abgerundeten Oberseite. Diese kann offen sein oder durch einen umlaufenden Radkranz oder eine Felge 52 verschlossen sein. In jedem Fall sollten die Räder 12 aber so ausgebildet sein, daß eine Bereifung noch aufgezogen werden kann.

In jeder Radscheibe 36 und 38 sind drei Öffnungen vorgesehen, die auf der Radscheibe gleichmäßig verteilt sind und eine Größe aufweisen, die einer Seite eines Aufnahmeraumes 40 entspricht. Die Öffnungen in den beiden Radscheiben sind außerdem zueinander versetzt, so daß einer Öffnung in der ersten Radscheibe 36 eine Öffnung in der zweiten Radscheibe 38 folgt und dieser wiederum eine weitere Öffnung in der ersten Radscheibe. Auf diese Weise sind die Aufnahmeräume 40 nach einer Seite hin offen und werden an der der offenen Seite abgelegenen Seite durch die andere Radscheibe verschlossen, wie es aus Fig. 2 hervorgeht. Bei nebeneinanderliegenden Aufnahmeräumen 40 ist der vordere damit durch die erste oder zweite Radscheibe 36 oder 38 und der folgende Aufnahmeraum durch die zweite oder erste Radscheibe 38 oder 36 zugänglich.

Jeder Satz 14 Radgewichte weist drei mit gegenseitigem Abstand angeordnete Radgewichte 42 auf, die jeweils über eine Platte 44 miteinander verbunden sind. Die Abstände sind dabei derart gewählt, daß beide Sätze Radgewichte ineinandergeschoben werden können, wobei zwischen benachbarten Radgewichten 42 noch ein Abstand verbleibt, der der Stärke einer Rippe entspricht. Im in das Rad 12 eingesetzten Zustand ergibt sich damit zusammen mit den Rippen ein mehr oder weniger vollkommen geschlossener Umfangsmantel und das Rad ist durch die Gewichte vollständig ausgefüllt. Die Anzahl drei für jeden Satz 14 Radgewichte ist nicht zwingend.

Jede Platte 44 ist ringförmig ausgebildet mit einer inneren Öffnung, die dem Radnabendurchmesser angepaßt ist. Die beiden Platten 44 sind starr mit ihren Gewichten 42 verbunden und liegen nach der Montage gegen die Außenseiten der beiden Radscheiben 36 und 38 an. In den Freiräumen zwischen den einzelnen Radgewichten 42 weist jede Platte 44 Durchgangslöcher 46 auf, durch die Schrauben 46 gesteckt werden können, um die Radgewichte zu befestigen. Im einzelnen sind drei Durchgangslöcher 46 in jeder Platte vorgesehen, die damit auch zueinander versetzt sind und zu Durchgangslöchern in der ersten und in der zweiten Radscheibe 36 und 38 ausgerichtet sind, so daß die Schrauben 48 durch die zueinander ausgerichteten Durchgangslöcher 46 gesteckt und in die Radgewichte 42 des anderen Satzes Radgewichte eingeschraubt werden können. Hierzu weisen die Radgewichte 42 beider Sätze 14 Gewindebohrungen 50 auf (siehe Fig. 5). Auf diese Weise werden die sich gegenüberliegenden Sätze Radgewichte miteinander verbunden. Eine Befestigung nur an der Radscheibe findet nicht statt. Das Gewicht der einzelnen Radgewichte 42 wird von den Aufnahmeräumen 40 aufgenommen und nicht von einer Radscheibe, was bei einer Kunststoffbauweise von besonderem Vorteil ist.

Die Öffnungen in der außen liegenden Radscheibe können durch eine nicht dargestellte Radkappe verschlossen werden, die auf die Radscheibe in bekannter Weise aufsetzbar ist.

Die Montage der beiden Sätze 14 Radgewichte an einem Rad 12 ist einfach. Das Rad 12 muß hierzu lediglich von seiner Radachse abgenommen zu werden. Das Rad 12 wird hierzu auf einen beispielsweise mit seiner Platte 44 auf dem Boden liegenden Satz 14 Radgewichte aufgesetzt und der zweite Satz 14 Radgewichte wird danach von der anderen Seite oder von oben in das Rad eingesetzt, wobei die dann oben liegende Platte 44 mit ihren Durchgangsöffnungen 46 zu den Gewindebohrungen 50 in den Radgewichten 42 des anderen oder unten liegenden Satzes 14 ausgerichtet ist. Danach brauchen dann lediglich die drei Schrauben 48 von oben eingeschraubt zu werden. Bei Bedarf können von der anderen Seite ebenfalls drei Schrauben noch eingeschraubt werden. Die Breite der Radgewichte 42 ist so gewählt, daß die Platten 44 nicht über die Radbreite überstehen und noch Platz für das Aufsetzen der Radkappe lassen. Bei aufgesetzter Radkappe sind die Radgewichte nicht mehr sichtbar. Sie können in keinem Fall beim Einsatz mit irgendwelchen Hindernissen, wie Sträuchern oder Bäumen kollidieren.

Die Sätze Radgewichte können so gestaltet sein, daß sie in die vorderen und in die rückwärtigen Laufräder 32, 34 eingesetzt werden, die bei derartigen Fahrzeugen unterschiedliche Durchmesser aufweisen können. In jedem Fall sind die Radgewichte leicht zu handhaben, da das Gesamtgewicht in zwei Sätze 14 aufgeteilt ist.

## Patentansprüche

1. Fahrzeugrad mit einer Radnabe, einem Felgenabschnitt und einer Felgenabschnitt und Radnabe verbindenden ersten Radscheibe (36), wobei zwischen Felgenabschnitt und Radnabe Rippen vorgesehen sind und benachbarte Rippen zwischen sich Aufnahmeräume (40) für Radgewichte (42) bilden, dadurch gekennzeichnet, daß auf der Radnabe mit Querabstand zu der ersten Radscheibe (36) eine zweite Radscheibe (38) vorgesehen ist und die erste und zweite Radscheibe (36, 38) mindestens je eine Öffnung aufweisen, die derart angeordnet und ausgebildet sind, daß Radgewichte (42) in benachbarte Aufnahmeräume (40) abwechselnd durch die erste und durch die zweite Radscheibe (36, 38) einsetzbar sind.

2. Fahrzeugrad nach Anspruch 1, dadurch gekennzeichnet, daß benachbarte Radgewichte (42) miteinander in den Aufnahmeräumen (40) verbindbar sind.

3. Fahrzeugrad nach Anspruch 1 oder 2, dadurch gekennzeichnet, daß die Rippen sich radial erstrecken und zwischen sich keilförmige durch eine Felge (52), die Radnabe und die erste oder die zweite Radscheibe (36, 38) begrenzte Aufnahmeräume (40) bilden.

4. Fahrzeugrad nach einem oder mehreren der vorherigen Ansprüche, dadurch gekennzeichnet, daß die erste und die zweite Radscheibe (36, 38) mindestens zwei zu je einem Aufnahmeraum (40) führende Öffnungen aufweist.

5. Fahrzeugrad nach Anspruch 4, dadurch gekennzeichnet, daß ein erster Satz miteinander verbundener Radgewichte (42) durch die Öffnungen in der ersten Radscheibe (36) und ein zweiter Satz miteinander verbundener Radgewichte (42) durch die Öffnungen in der zweiten Radscheibe (38) in ihre zugehörigen Aufnahmeräume (40) einsetzbar ist.

6. Fahrzeugrad nach Anspruch 5, dadurch gekennzeichnet, daß die Radgewichte (42) eines jeden Satzes über eine Platte (44) miteinander verbunden sind, die mit wenigstens einem Radgewicht (42) des anderen Satzes verschraubbar ist, wobei die Radscheibe (36, 38), durch die der Satz einsetzbar ist, zwischen ihren Öffnungen mindestens ein Durchgangsloch (46) aufweist.

7. Fahrzeugrad nach einem oder mehreren der vorherigen Ansprüche, dadurch gekennzeichnet, daß die Öffnungen der außen liegenden Radscheibe (36 bzw. 38) durch eine Radkappe verschließbar sind.

8. Fahrzeugrad nach Anspruch 6, dadurch gekennzeichnet, daß die Platte (44) ringförmig ausgebildet ist und eine innere Öffnung aufweist, die der Nabenöffnung entspricht.

9. Fahrzeugrad nach einem oder mehreren der vorherigen Ansprüche, dadurch gekennzeichnet, daß es aus Kunststoff hergestellt ist.

## Claims

1. A vehicle wheel with a wheel hub, a rim section and a first wheel disc (36) connecting the rim section and wheel hub, wherein ribs are provided in between the rim section and wheel hub and receiving spaces (40) for wheel weights (42) are provided between adjacent ribs, characterized in that a second wheel disc (38) is provided on the wheel hub, transversely spaced from the first wheel disc (36) and the first and second wheel discs (36, 38) each have at least one opening, the openings being so arranged and formed that wheel weights (42) can be fitted in adjacent receiving spaces (40) through the first and second wheel discs (36, 38) alternately.

2. A vehicle wheel according to claim 1, characterized in that adjacent wheel weights (42) can be connected together in the receiving spaces (40).

3. A vehicle wheel according to claim 1 or 2, characterized in that the ribs extend radially and form wedge-shaped receiving spaces (40) therebetween, bounded by a rim (52), the wheel hub and the first or the second wheel disc (36, 38).

4. A vehicle wheel according to one or more of the preceding claims, characterized in that the first and second wheel discs (36, 38) have at least two openings each leading to a receiving space (40).

5. A vehicle wheel according to claim 4, characterized in that a first set of wheel weights (42) connected together can be fitted in their respective receiving spaces (40) through the openings in the first wheel disc (36) and a second set of wheel weights (42) connected together can be fitted in their respective receiving spaces (40) through the openings in the second wheel disc (38).

6. A vehicle wheel according to claim 5, characterized in that the wheel weights (42) of each set are connected together by a plate (44) which can be screwed to at least one wheel weight (42) of the other set, wherein the wheel disc (36, 38) through which the set can be fitted has at least one hole (46) therethrough between its openings.

7. A vehicle wheel according to one or more of the preceding claims, characterized in that the openings of the outer wheel disc (36 or 38) can be closed by a wheel cap.

8. A vehicle wheel according to claim 6, characterized in that the plate (44) is of annular shape and has in inner opening which corresponds to the hub opening.

9. A vehicle wheel according to one or more of the preceding claims, characterized in that it is made of plastics material.

## Revendications

1. Roue de véhicule comportant un moyeu de roue, une section de jante et un premier voile de roue (36) qui relie la section de jante et le moyeu de roue, et dans laquelle des nervures sont prévues entre la section de jante et le moyeu de roue et des nervures voisines sont formées entre des espaces de logement (40) pour des poids de roue (42), caractérisée en ce qu'un second voile de roue (38) est monté sur le moyeu de roue, à une certaine distance transversale du premier voile de roue (36) et que les premier et second voiles de roue (36, 38) possèdent chacun au moins une ouverture, ces ouvertures étant disposées et agencées de telle sorte que les poids de roue (42) peuvent être insérés dans les espaces de logement voisins (40), alternativement à travers les premier et second voiles de roue (36,38).

2. Roue de véhicule selon la revendication 1, caractérisée en ce que des poids de roue (42) voisins peuvent être reliés entre eux dans les espaces de logement (40).

3. Roue de véhicule selon la revendication 1 ou 2, caractérisée en ce que les nervures s étendent radialement et forment entre elles des espaces de logements en forme de coins (40) qui sont délimités par une jante (52), le moyeu de roue et le premier ou le second voile de roue (36,38).

4. Roue de véhicule selon une ou plusieurs des revendications précédentes, caractérisée en ce que le premier voile de roue et le second voile de roue (36,38) possèdent au moins deux ouvertures qui débouchent dans un espace de logement (40).

5. Roue de véhicule selon la revendication 4, caractérisée en ce qu'un premier ensemble de poids de roue (42), qui sont reliés entre eux, peut être inséré dans les ouvertures ménagées dans le premier voile de roue (36) et qu'un second ensemble de poids de roue (42), qui sont reliés entre eux, peut être inséré par les ouvertures ménagées dans le second voile de roue (38), dans les espaces de logement (40) qui leur sont associés.

6. Roue de véhicule selon la revendication 5, caractérisée en ce que les poids de roue (42) de chaque ensemble sont reliés entre eux par l'intermédiaire d'une plaque (44), qui peut être reliée par vissage à au moins un poids de roue (42) de l'autre ensemble, le voile de roue (36,38), à travers lequel l'ensemble peut être inséré, possédant au moins un trou de passage (46) entre ses ouvertures.

7. Roue de véhicule selon une ou plusieurs des revendications précédentes, caractérisée en ce que les ouvertures du voile de roue extérieur (36 ou 38) peuvent être fermées par un enjoliveur de roue.

8. Roue de véhicule selon la revendication 6, caractérisée en ce que la plaque (44) possède une forme annulaire et comporte une ouverture intérieure, qui correspond à l'ouverture du moyeu.

9. Roue de véhicule selon une ou plusieurs des revendications précédentes, caractérisée en ce qu'elle est réalisée en matière plastique.
